**Europäisches Patentamt**

**European Patent Office**

**Office européen des brevets**

(11) Veröffentlichungsnummer: **0 033 133**
**A1**

(12) # EUROPÄISCHE PATENTANMELDUNG

(21) Anmeldenummer: **81100440.7**

(22) Anmeldetag: **22.01.81**

(51) Int. Cl.³: **C 04 B 23/02**
**C 04 B 35/16**

(30) Priorität: **23.01.80 DE 3002346**

(43) Veröffentlichungstag der Anmeldung:
**05.08.81 Patentblatt 81/31**

(84) Benannte Vertragsstaaten:
**AT BE CH FR GB IT LI LU NL SE**

(71) Anmelder: **LICENCIA TALALMANYOKAT ERTEKESITÖ VALLALAT**
**Bajcsy-Zsilinszky Ut, 16**
**Budapest V.(HU)**

(72) Erfinder: **Puskás, Ferenc**
**Monostori u. 25**
**H-1031 Budapest III.(HU)**

(72) Erfinder: **Lázár, Ferenc**
**Tudnádi köz 3**
**H-1125 Budapest XII.(HU)**

(74) Vertreter: **Beszédes, Stephan G. Dr.**
**Münchener Strasse 80a Postfach 1168**
**D-8060 Dachau(DE)**

(54) **Verfahren zur Herstellung von geschmolzenen Silikatmaterialien.**

(57)  Verfahren zur Herstellung von geschmolzenen Silikatmaterialien mit einem Gehalt an 40 bis 67 Gew.-% $SiO_2$, 3 bis 20 Gew.-% $Al_2O_3$, 2 bis 18 Gew.-% $FeO + Fe_2O_3$, 2 bis 9 Gew.-% Alkalioxyden und 8 bis 30 Gew.-% Erdalkalimetalloxyden, bei welchem als Grundmaterial(ien) gemeindliche Abfälle (Gemeindemüll), industrielle Abfälle, Abwasserschlamm der Papierherstellung, Abwasserklärschlamm, Kanalschlamm, Kohle und/oder Ölschiefer, gegebenenfalls in Mischung mit landwirtschaftlichen Abfällen verwendet werden. Die verbrennbaren Mengenanteile werden in einem Kessel verbrannt und die so erhaltene un brennbare Schlackenschmelze bei 1 100 bis 1 500°C während 1 bis 4 Stunden entgast, wobei gegebenenfalls Zusatzstoffe zur Korrektur der Zusammensetzung beigefügt werden.

Die so erhaltenen geschmolzenen Silikatmaterialien können auf dem Gebiet der Keramik und des Bauwesens, beispielsweise für Kunststeine, Wandplatten und Bauabdeckungen, verwendet werden.

EP 0 033 133 A1

Croydon Printing Company Ltd.

DR. STEPHAN G. BESZÉDES

PATENTANWALT


ZUGELASSENER VERTRETER
AUCH BEIM EUROPÄISCHEN PATENTAMT

PROFESSIONAL REPRESENTATIVE ALSO
BEFORE THE EUROPEAN PATENT OFFICE

**0033133**

8060 DACHAU BEI MÜNCHEN
POSTFACH 1168


MÜNCHENER STRASSE 80 A


Bundesrepublik Deutschland


TELEPHON: DACHAU 4371

Postscheckkonto München (BLZ 700 100 80)
Konto-Nr. 1 368 71
Bankkonto-Nr. 906 370 bei der Kreis- und Stadtsparkasse Dachau-Indersdorf (BLZ 700 515 40)
(VIA Bayerische Landesbank
Girozentrale, München)

P 1 295 EU

– 1 –

B e s c h r e i b u n g


zur Patentanmeldung


LICENCIA TALÁLMÁNYOKAT ÉRTÉKESÍTŐ VÁLLALAT


Budapest, Ungarn


betreffend


Verfahren zur Herstellung von geschmolzenen Silikatmaterialien

Die Erfindung betrifft ein neues Verfahren zur Herstellung von geschmolzenen Silikatmaterialien aus Grundmaterialen mit verhältnismäßig hohem verbrennbarem Mengenanteil, gegebenenfalls zusammen mit Zusatzstoffen.

– 2 –

Von der Industrie werden schon seit mehreren Jahrzehnten geschmolzene Silikatmaterialien, beispielsweise kristalline Kunststeine, glaskeramische Materialien, Mineral- und Schlackenwolle, mit der chemischen Zusammensetzung von vulkanischen Gesteinen mehr oder minder ähnlicher chemischer Zusammensetzung hergestellt und angewandt. Die einfachste Art der Herstellung der geschmolzenen Silikatmaterialien ist das Brechen des abgebauten natürlichen vulkanischen Gesteines, zum Beispiel Basaltes, selbst zur gewünschten Korngröße, Schmelzen und Formgießen. In dieser Weise werden beispielsweise Verkleidungs- beziehungsweise Wandplatten und Kanalrohre hergestellt (Dr. Lôcsei Béla: "Olvasztott szilikátok és tulajdonságaik", Akadémiai Kiadó, Budapest, 1967).

Aus den ungarischen Patentschriften 162 340 und 163 055 sind Verfahren zur Herstellung von künstlichen Eruptivgesteinen beziehungsweise magmatischen Gesteinen aus Kohlenschlacke beziehungsweise Kraftwerkflugasche durch deren Schmelzen in der Weise, daß zur Schlacke zur Verminderung der Schmelztemperatur Kryolith, Fluorit beziehungsweise Natriumcarbonat zugegeben wird, bekannt. Diese verschlackend beziehungsweise verflüssigend wirkenden Zusatzstoffe vermindern die Viskosität der Schmelze, so daß deren Entgasen und Formgießen bei 1 400 bis 1 800°C durchgeführt werden kann. Die Korrektur der chemischen Zusammensetzung des Grundmateriales wird mit 3 bis 30 Gew.-% Zusatzstoff, beispielsweise Perlit, Phonolith, Rhyolithtuff, Kalkstein oder Dolomit beziehungsweise deren Mischungen in verschiedenen Verhältnissen, sichergestellt. Schon diese Verfahren zielten darauf ab, im Vergleich zu den damals bekannten natürliche vulkanische Grundmaterialien verarbeitenden Verfahren, in erster Li-

nie durch Wegfall des Abbaues und der Zerkleinerung, aus mit geringerem Aufwand verbundenen Grundmaterialien eine wirtschaftlichere Herstellung zu ermöglichen. Mit diesen Verfahren waren aber die Nachteile der zum Schmelzen der Grundmaterialien erforderlichen hohen Temperaturen, des zeitaufwendigen und verwickelten Homogenisierens der Zusatzstoffe mit dem Grundmaterial und der Forderung von besonderen Konstruktionswerkstoffen infolge der notwendigen hohen Temperaturen und des aggressiven Charakters der Schmelze verbunden. Wahrscheinlich liegt darin die Erklärung dafür, daß sich diese Verfahren in der technischen beziehungsweise industriellen Praxis nicht verbreiteten.

Der Erfindung liegt die Aufgabe zugrunde, unter Behebung der Nachteile des Standes der Technik ein Verfahren zur Herstellung von geschmolzenen Silikatmaterialien, bei welchem bei verhältnismäßig niedriger Temperatur schmelzbare und gießbare sowie einen hohen verbrennbaren Mengenanteil aufweisende Grundmaterialien verwendet sowie wirksame und mit einem geringen Aufwand verbundene Zusatzstoffe eingesetzt werden können und diese letzeren, wenn überhaupt, nur in geringer Menge eingesetzt werden müssen und außer durch die leichtere Schmelzbarkeit und Gießbarkeit der Grundmaterialien auch dadurch eine erhebliche Wärmeenergieeinsparung erzielt werden kann, daß die Grundmaterialien mit hohem verbrennbarem Mengenanteil, gegebenenfalls in Gegenwart der ergänzenden Zusatzstoffe, unter Bildung einer Schmelze aus dem unbrennbaren Mengenanteil verbrannt werden, zu schaffen.

Das Obige wurde überraschenderweise durch die Erfindung erreicht.

Es wurde nämlich nun überraschenderweise festgestellt,
daß die verschiedenen Kohlenarten, Ölschiefer, gemeindlichen Abfälle sowie zahlreichen industriellen und landwirtschaftlichen Abfallstoffe mit hohem verbrennbarem Mengenanteil sich zur Verarbeitung zu geschmolzenen Silikaten
eignen. Es ergab sich, daß mit diesen Grundmaterialien
überhaupt kein die Viskosität vermindernder Zusatzstoff
oder nur eine geringere Menge von solchen als bei den bekannten Verfahren verwendet werden muß. Der Wärmeinhalt
der, gegebenenfalls mit den Zusatzstoffen, verbrannten
Grundmaterialien mit hohem verbrennbarem Mengenanteil
reicht im wesentlichen aus, um den unbrennbaren Rückstand
zu schmelzen, oder es ist hierzu nur eine vernachlässigbare ergänzende Wärmemengenzufuhr erforderlich.

Erfindungsgemäß handelt es sich um die Herstellung von
geschmolzenen Silikatmaterialien mit einem Gehalt an
40 bis 67 Gew.-% $SiO_2$ , 3 bis 20 Gew.-% $Al_2O_3$ , 2 bis
18 Gew.-% $FeO + Fe_2O_3$ , 2 bis 9 Gew.-% Alkalioxyden und
8 bis 30 Gew.-% Erdalkalimetalloxyden als chemischen
Hauptbestandteilen durch Verbrennen von 1 oder mehr einen
hohen verbrennbaren Mengenanteil enthaltenden Grundmaterial(ien), nämlich gemeindlichen Abfällen (Gemeindemüll), industriellen Abfällen, Abwasserschlamm der Papierherstellung, Abwasserklärschlamm, Kanalschlamm, Kohle und/oder
Ölschiefer, gegebenenfalls in Mischung mit landwirtschaftlichen Abfällen und/oder im Falle der Verwendung
von von industriellen Abfällen verschiedenen Grundmaterialien, industriellen Abfällen und/oder gegebenenfalls zusammen mit 1 oder mehr der Zusatzstoffe Flugstaub der Glasherstellung, Rotschlamm der Tonerdeherstellung, Dolomit, Kalksteinstaub, silikathaltiger industrieller beziehungsweise gewerblicher Flugstaub, Quarzsand, Gips, Manganerz(e), Fluorit, Kryolith, Borocalcit, Wollastonit und Laugensalzkonzentrat(e) der Tonerdeherstellung, unter Schmelzen, Entgasen des unbrennbaren Rückstandes, gegebenenfalls mit Vermindern des Gehaltes der Schmelze an $FeO + Fe_2O_3$ durch carbothermische Reduktion und Entfernen des metallischen Eisens, und Verarbeiten der Schmelze sowie gegebenenfalls Kristallisieren derselben.

Gegenstand der Erfindung ist daher ein Verfahren zur Herstellung von geschmolzenen Silikatmaterialien mit einem Gehalt an 40 bis 67 Gew.-% $SiO_2$ , 3 bis 20 Gew.-% $Al_2O_3$ , 2 bis 18 Gew.-% $FeO + Fe_2O_3$ , 2 bis 9 Gew.-% Alkalioxyden und 8 bis 30 Gew.-% Erdalkalimetalloxyden als chemischen Hauptbestandteilen durch Entgasen von 1 oder mehr Grundmaterial(ien), gegebenenfalls zusammen mit geringen Mengen von 1 oder mehr der Zusatzstoffe Flugstaub der Glasherstellung, Rotschlamm der Tonerdeherstellung, Dolomit, Kalksteinstaub, silikathaltiger industrieller beziehungsweise gewerblicher Flugstaub, Quarzsand, Gips, Manganerz(e), Fluorit, Kryolith, Borocalcit, Wollastonit und Lagensalzkonzentrat(e) der Tonerdeherstellung unter Schmelzen bei erhöhten Temperaturen, erforderlichenfalls mit Vermindern des Gehaltes der Schmelze an $FeO + Fe_2O_3$ durch carbothermische Reduktion unter 18 Gew.-%, vorteilhaft unter 15 Gew.-%, und anschließendem Abtrennen des metallischen Eisens, sowie Verarbeiten der Schmelze in einer Schleuderrohrgießvorrichtung, Gießform, zerfasernden Zentrifuge oder anderen maschinellen Verarbeitungsvorrichtung, gegebenenfalls bei einer Temperatur von 500 bis 1 300°C während 0,5 bis 15 Stunden, zu geschmolzenen massiven Silikatkörpern, geschmolzener Silikatwolle oder geschmolzenem Silikatschaum, welches dadurch gekennzeichnet
ist, daß als Grundmaterial(ien) gemeindliche Abfälle (Gemeindemüll), industrielle Abfälle, Abwasserschlamm der Papierherstellung, Abwasserklärschlamm, Kanalschlamm, Kohle
und/oder Ölschiefer, gegebenenfalls in Mischung mit landwirtschaftlichen Abfällen und/oder im Falle der Verwendung
von von industriellen Abfällen verschiedenen Grundmaterialien,
industriellen Abfällen, verwendet wird beziehungsweise werden, vor dem Entgasen ein Verbrennen des verbrennbaren Mengenanteiles in einem Kessel, vorteilhaft Schlackenschmelzmüllverbrennungskessel, insbesondere in einem mit Zyklonfeuerung, durchgeführt wird und das Entgasen der so erhaltenen
unbrennbaren Schlackenschmelze bei 1 100 bis 1 500°C während
1 bis 4 Stunden vorgenommen wird, wobei die gegebenenfalls
durchgeführte Zugabe des Zusatzstoffes beziehungsweise der
Zusatzstoffe vor und/oder während der Bildung des unbrennbaren Rückstandes des Grundmateriales beziehungsweise der
Grundmaterialien und/oder in an sich bekannter Weise zum
unbrennbaren Rückstand des Grundmateriales beziehungsweise
der Grundmaterialien zur Korrektur der Zusammensetzung vorgenommen wird, mit der weiteren Maßgabe, daß im Falle der alleinigen Verwendung von Kohle als Grundmaterial mindestens ein
Anteil mindestens 1 Zusatzstoffes vor und/oder während der
Bildung des unbrennbaren Rückstandes des Grundmateriales beziehungsweise der Grundmaterialien zugegeben wird.

Der Ausdruck "Entgasen" ist in seinem weitesten Sinne
als das Freisetzen der Gase von ihrem gebundenen Zustand,
also auch den Fall ihres Verbleibens als Blasen in den
silikathaltigen Materialien, beispielsweise bei der Herstellung von Kunststeinschäumen, umfassend zu verstehen.

Das erfindungsgemäße Verfahren bringt den großen technischen Fortschritt mit sich, daß in ihm bei verhältnismäßig
niedriger Temperatur schmelzbare und gießbare und einen hohen verbrennbaren Mengenanteil aufweisende
Grundmaterialien verwendet werden können und dadurch
das Schmelzen und Gießen bei niedrigerer Temperatur durchgeführt werden können, was eine entsprechende Energieeinsparung bedeutet, wozu als weiterer besonders bedeutender Energieeinsparungsfaktor hinzukommt, daß
der Wärmeinhalt der verwendeten Grundmaterialien ausreicht oder nahezu ausreicht, um den unbrennbaren Rückstand zu schmelzen, was auch eine erhöhte Wirtschaftlichkeit bedeutet. Hinzukommt noch der weitere Vorteil, daß,
soweit überhaupt Zusatzstoffe erforderlich sind, solche
mit hoher Wirksamkeit und leichter Zugänglichkeit nur in
verhältnismäßig geringer Menge verwendet werden müssen.

Die gegebenenfalls erfolgende Zugabe des Zusatzstoffes
beziehungsweise der Zusatzstoffe vor der Bildung des unbrennbaren Rückstandes des Grundmateriales beziehungsweise der Grundmaterialien kann durch Vermahlen des Zusatzstoffes beziehungsweise der Zusatzstoffe mit dem Grundmaterial beziehungsweise den Grundmaterialien oder getrenntes Einbringen des Zusatzstoffes beziehungsweise der Zusatzstoffe und des Grundmateriales beziehungsweise der Grundmaterialien in den Verbrennungsraum vor der Verbrennung oder
Einblasen des Zusatzstoffes beziehungsweise der Zusatzstoffe
und des Grundmateriales beziehungsweise der Grundmaterialien in den Verbrennungsraum während der Verbrennung durchgeführt werden.

Besonders vorteilhaft kann das geschmolzene Silikatmaterial der gewünschten chemischen Zusammensetzung in der
Weise hergestellt werden, daß der ergänzende Zusatzstoff
beziehungsweise die ergänzenden Zusatzstoffe zum größeren Teil
mit dem Grundmaterial beziehungsweise den Grundmaterialien
am Anfang vermischt und zum geringeren Teil der Schmelze
des nach dem Verbrennen verbliebenen unbrennbaren Rückstandes zugesetzt werden, soweit eine Korrektur der Zusammensetzung erforderlich ist.

Nach einer zweckmäßigen Ausführungsform des erfindungsgemäßen Verfahrens wird zur Herstellung von geschmolzenen Silikatmaterialien mit einem Gehalt an 40 bis 65 Gew.-% $SiO_2$ , 5 bis 20 Gew.-% $Al_2O_3$ , 2 bis 18 Gew.-% $FeO + Fe_2O_3$ , 2 bis 9 Gew.-% Alkalioxyden und 8 bis 27 Gew.-% Erdalkalimetalloxyden als chemischen Hauptbestandteilen bei Verwendung von gemeindlichen Abfällen als alleinigem Grundmaterial das Entgasen bei 1 200 bis 1 400°C durchgeführt und das beim Verarbeiten der Schmelze gegebenenfalls erfolgende Erhitzen auf 500 bis 1 200°C vorgenommen.

Nach einer anderen zweckmäßigen Ausführungsform des erfindungsgemäßen Verfahrens wird zur Herstellung von geschmolzenen Silikatmaterialien mit einem Gehalt an 45 bis 67 Gew.-% $SiO_2$ , 3 bis 20 Gew.-% $Al_2O_3$ , 3 bis 15 Gew.-% $FeO + Fe_2O_3$ , 2 bis 7 Gew.-% Alkalioxyden und 10 bis 30 Gew.-% Erdalkalioxyden als chemischen Hauptbestandteilen bei Verwendung von Kohle und/oder Ölschiefer als Grundmaterial(ien) das Entgasen bei 1 300 bis 1 500°C durchgeführt und das beim Verarbeiten der Schmelze gegebenenfalls erfolgende Erhitzen auf 500 bis 1 300°C während 2 bis 12 Stunden vorgenommen.

Nach einer weiteren zweckmäßigen Ausführungsform des erfindungsgemäßen Verfahrens wird zur Herstellung von geschmolzenen Silikatmaterialien mit einem Gehalt von 40 bis 65 Gew.-% $SiO_2$ , 5 bis 15 Gew.-% $Al_2O_3$ , 2 bis 15 Gew.-% $FeO + Fe_2O_3$ , 2 bis 7 Gew.-% Alkalioxyden und 8 bis 25 Gew.-% Erdalkalioxyden als chemischen Hauptbestandteilen im Falle der Verwendung von gemeindlichen Abfällen, industriellen Abfällen, Abwasserschlamm der Papierherstellung, Abwasserklärschlamm und/oder Kanalschlamm in Mischung mit landwirtschaftlichen Abfällen und/oder industriellen Abfällen als Grundmaterialien das Entgasen bei 1 100 bis 1 400°C durchgeführt und das beim Verarbeiten der Schmelze gegebenenfalls erfolgte Erhitzen auf 500 bis 1 200°C während 1 bis 15 Stunden vorgenommen.

Vorzugsweise wird der Zusatzstoff beziehungsweise werden die Zusatzstoffe in Mengen bis insgesamt 15 Gew.-%, insbesondere bis insgesamt 10 Gew.-%, bezogen auf das eingesetzte Grundmaterial beziehungsweise die eingesetzten Grundmaterialien, verwendet.

Es ist auch bevorzugt, während des Formens als Verarbeitens der unbrennbaren Schlackenschmelze oder danach ein Abkühlen, darauffolgend durch erneutes Erhitzen auf 500 bis 1 300°C ein Kristallisieren und schließlich ein Abkühlen auf die Umgebungstemperatur durchzuführen.

Vorzugsweise wird das Entgasen der unbrennbaren Schlackenschmelze unmittelbar nach ihrer Bildung ohne deren Abkühlen beziehungsweise Abkühlenlassen durchgeführt.

Nach einer speziellen anderen Ausführungsform des erfindungsgemäßen Verfahrens wird vor dem Entgasen der unbrennbaren Schlackenschmelze ein Abziehen und Abkühlen derselben und darauffolgend Schmelzen durch erneutes Erhitzen durchgeführt, das Formen als Verarbeiten bei 1 100 bis 1 400°C vorgenommen und danach ein Kristallisieren durchgeführt.

Beispiele für erfindungsgemäß verwendbare industrielle beziehungsweise landwirtschaftliche Abfälle sind Sägemehl, Gummireifen, Pakuraschlamm, Masutschlamm beziehungsweise Rückstandsölschlamm und Hanfschäbe.

Die Erfindung wird an Hand der folgenden Beispiele näher erläutert.

## Beispiel 1

Es wurden in einem Schlackenschmelzmüllverbrennungskessel eine Mischung aus 1 880 kg Gemeindemüll der folgenden Zusammensetzung

95,5 Gew.-%  verbrennbarer Mengenanteil        und

4,5 Gew.-%   unbrennbarer Mengenanteil (verbleibt
             als Rückstand beziehungsweise Schlak-
             ke),

             letzterer mit

    50,5 Gew.-%   $SiO_2$ ,

    10,5 Gew.-%   $Al_2O_3$ ,

    17,4 Gew.-%   $FeO + Fe_2O_3$ ,

    13,9 Gew.-%   $CaO$,

     1,5 Gew.-%   $MgO$,

    6   Gew.-%   $Na_2O + K_2O$     und

    0,2 Gew.-%   Sonstigem     ,

100 kg Rotschlamm der Tonerdeherstellung der folgenden
Zusammensetzung

13,6 Gew.-%   $SiO_2$ ,

16,5 Gew.-%   $Al_2O_3$ ,

41,5 Gew.-%   $FeO + Fe_2O_3$ ,

3,3 Gew.-%   $CaO$,

1,1 Gew.-%   $MgO$,

6,1 Gew.-%   $Na_2O$,

4   Gew.-%   $TiO_2$ ,

0,4 Gew.-%   $MnO$,

0,24 Gew.-%   $V_2O_5$ ,

0,05 Gew.-%   $F$,

0,19 Gew.-%   $P_2O_5$ ,

0,4 Gew.-%   $SO_3$ ,

0,08 Gew.-%   $Cr_2O_3$ ,

0,94 Gew.-%   $MoO_3$         und

11,6 Gew.-%   Glühverlust + Sonstiges   ,


100 kg Quarzsand, 5 kg Gips, 5 kg Manganerz der folgenden Zusammensetzung

- 12 -

10 Gew.-% $SiO_2$ ,

7 Gew.-% $Al_2O_3$ ,

15 Gew.-% $FeO + Fe_2O_3$ ,

3,3 Gew.-% $CaO$ und

65 Gew.-% $MnO_2$ .

und 5 kg Calciumfluorid verbrannt und die geschmolzene unbrennbare Schlacke wurde in den unter dem Kessel angeordneten mit einer Heizung versehenen Entgasungsraum fließen gelassen. Da der Eisenoxydgehalt der Schmelze 19 Gew.-% $FeO + Fe_2O_3$ betrug, wurden gleichzeitig 30 kg Koks zugesetzt und bei etwa 1 350°C wurden 26 kg reduzierte Eisenschmelze durch Abziehen für die Weiterverarbeitung abgetrennt. Zu den restlichen 245 kg Schlacke wurde zur Erhöhung des Anteiles des Magnesiumoxydbestandteiles 10 kg Dolomit der folgenden Zusammensetzung

30,6 Gew.-% $CaO$,

20,3 Gew.-% $MgO$,

47 Gew.-% Glühverlust und

2,1 Gew.-% Sonstiges

zugegeben. Die Temperatur von etwa 1 350°C der Schlackenschmelze wurde 4 Stunden lang gehalten. Nach dem Homogenisieren und Entgasen war die Zusammensetzung der Schmelze wie folgt:

- 13 -

| | | |
|---|---|---|
| 59 | Gew.-% | $SiO_2$ , |
| 10 | Gew.-% | $Al_2O_3$ , |
| 2,4 | Gew.-% | $FeO + Fe_2O_3$ , |
| 8,5 | Gew.-% | $CaO$, |
| 2 | Gew.-% | $MgO$, |
| 4,4 | Gew.-% | $Na_2O + K_2O$ , |
| 1,6 | Gew.-% | $MnO_2$ , |
| 1,6 | Gew.-% | $TiO_2$ , |
| 0,8 | Gew.-% | $F$, |
| 1 | Gew.-% | $SO_3$ , |
| 0,1 | Gew.-% | $V_2O_5$ , |
| 0,08 | Gew.-% | $P_2O_5$ , |
| 0,016 | Gew.-% | $MoO_3$ , |
| 0,03 | Gew.-% | $Cr_2O_3$ , |
| 2 | Gew.-% | $C$ und |
| 6,47 | Gew.-% | Sonstiges . |

Die entgaste Schmelze wurde in Treppenplattengießformen
mit Abmessungen von 300 mm x 1 500 mm x 50 mm abgezogen
und auf 500°C abkühlen gelassen und dann in einem Tunnelofen 1 Stunde auf 500 bis 700°C und 2 Stunden auf 700 bis
1 000°C gehalten, worauf nach 16 Stunden langem langsamem Abkühlen
verschleißfeste Kunststeine mit intergranularem Gefüge erhalten wurden.

Die Schmelze konnte auch in eine Schleuderrohrgießvorrichtung abgezogen werden, wodurch verschleißfeste und säure-
und laugenbeständige technische Rohre erhalten wurden. In
Abweichung vom Obigen wurden die schleudergegossenen Rohre
nach ihrem Abkühlen auf eine Temperatur von 600 bis 1 000°C
erhitzt, diese Temperatur 0,5 Stunde  lang gehalten und
danach erneut 12 Stunden lang abgekühlt, wodurch das gewünschte Kunststeinmaterial erhalten wurde.

## Beispiel 2

Es wurden 10 000 kg Gemeindemüll der im Beispiel 1
angegebenen Zusammensetzung in einem Schlackenschmelzmüllverbrennungskessel verbrannt, worauf die verbliebenen
450 kg Schmelze in einen Entgasungsraum fließen gelassen
und mit 50 kg Rotschlamm der Tonerdeherstellung der im
Beispiel 1 angegebenen Zusammensetzung und mit 30 kg Halbkoks
oder Petrolkoks versetzt und 4 Stunden lang bei 1 200°C
behandelt wurden. Die überschüssigen 25 kg reduziertes
Eisen wurden abgezogen. Danach war die Zusammensetzung
der homogenisierten und entgasten Schmelze wie folgt:

59,6 Gew.-%    $SiO_2$ ,

3,6  Gew.-%    $FeO + Fe_2O_3$ ,

12,5 Gew.-%    $Al_2O_3$ ,

12,9 Gew.-%    $CaO$,

1,8  Gew.-%    $MgO$,

5,2  Gew.-%    $Na_2O + K_2O$ ,

0,5  Gew.-%    $TiO_2$ ,

0,03 Gew.-%    $V_2O_5$ ,

0,02 Gew.-%    $P_2O_5$ ,

0,01 Gew.-%    $Cr_2O_3$ ,

0,8  Gew.-%    $SO_3$ ,

3    Gew.-%    C                und

0,05 Gew.-%    $MnO_2$ .

Darauffolgend wurde die Schmelze in einer Maschine mit
Walzenreihen zu 200 mm breiten und 8 mm dicken Platten geformt und 0,5 Stunde lang bei 800°C kristallisiert und
danach während 12 Stunden abgekühlt. Schließlich wurden
die Platten auf ein Längenmaß von 200 mm geschnitten, wodurch Endabmessungen von 200 mm x 200 mm x 8 mm erhalten
wurden. Die so hergestellten mikrokristallinen Verkleidungs-
beziehungsweise Wandplatten konnten ausgezeichnet für Außen-
und Innenbauverkleidungen verwendet werden.

Beispiel 3

Es wurden 1 400 kg Gemeindemüll der im Beispiel 1 angegebenen Zusammensetzung und 300 kg Braunkohlenpulver der folgenden Zusammensetzung

13 Gew.-% Asche ,

von dieser

42,3 Gew.-% $SiO_2$ ,

29 Gew.-% $Al_2O_3$ ,

9 Gew.-% $FeO + Fe_2O_3$ ,

9,5 Gew.-% $CaO$,

6 Gew.-% $MgO$ und

4,2 Gew.-% Sonstiges ,

in einem Schlackenschmelzmüllverbrennungskessel verbrannt. Die erhaltenen 100 kg Schlackenschmelze wurden in einen Entgasungsraum fließen gelassen und 1 Stunde lang auf eine Temperatur von 1 400°C erhitzt, worauf sie in einen Schäumraum mit einer Temperatur von 1 300°C geleitet und dort während mindestens 10 Minuten in bekannter Weise zu einem Kunststeinschaum der folgenden Zusammensetzung

47,5 Gew.-% $SiO_2$ ,

17,7 Gew.-% $Al_2O_3$ ,

14,1 Gew.-% $FeO + Fe_2O_3$ ,

12,2 Gew.-% $CaO$ ,

3,9 Gew.-% $MgO$,

3,7 Gew.-% $Na_2O + K_2O$ und

0,9 Gew.-% Sonstiges

verarbeitet wurden. Der erhaltene Kunststeinschaum konnte vorteilhaft in der Bautechnik und Wärmetechnik für Wärmeisolierungs- und Schallisolierungszwecke verwendet werden.

### Beispiel 4

Es wurden 2 000 kg Ölschiefer der folgenden Zusammen-setzung

45 Gew.-% verbrennbarer Mengenanteil    und

55 Gew.-% unbrennbarer Mengenanteil (verbleibt
     als Rückstand beziehungsweise Schlacke)

letzterer mit

54    Gew.-%  $SiO_2$ ,

21    Gew.-%  $Al_2O_3$ ,

7    Gew.-%  $FeO + Fe_2O_3$ ,

3    Gew.-%  $CaO$ ,

4,7 Gew.-%  $MgO$ ,

4,6 Gew.-%  $Na_2O + K_2O$        und

5,7 Gew.-%  Sonstigem

und 200 kg Kalksteinpulver der folgenden Zusammensetzung

52,3 Gew.-%  $CaO$,

2,5 Gew.-%  $MgO$        und

45,7 Gew.-%  Glühverlust

in einem Schlackenschmelzkessel mit Zyklonfeuerung verbrannt und die erhaltenen 500 kg entgaste Schlackenschmelze
der folgenden Zusammensetzung

- 19 -

$$49 \text{ Gew.-\% } SiO_2 ,$$

$$19 \text{ Gew.-\% } Al_2O_3 ,$$

$$6{,}4 \text{ Gew.-\% } FeO + Fe_2O_3 ,$$

$$12 \text{ Gew.-\% } CaO,$$

$$4{,}5 \text{ Gew.-\% } MgO,$$

$$4{,}2 \text{ Gew.-\% } Na_2O + K_2O \quad \text{und}$$

$$4{,}9 \text{ Gew.-\% } \text{Sonstiges}$$

wurden durch Zentrifugieren zu Kunststeinfasern verarbeitet.

Auch mit einem Ölschiefer mit einem geringeren verbrennbaren Mengenanteil konnten bei dessen Verbrennen zusammen mit Pakuraschlamm gute Ergebnisse erzielt werden.

## Beispiel 5

Es wurde eine Mischung aus 2 000 kg Ölschiefer der im Beispiel 4 angegebenen Zusammensetzung und 20 kg Kalksteinpulver der im Beispiel 4 angegebenen Zusammensetzung in einem Kessel mit Öl- beziehungsweise Gashilfsfeuerung verbrannt. Die als Rückstand verbliebene Schlacke wurde mit 30 kg Laugensalzkonzentrat der Tonerdeherstellung der folgenden Zusammensetzung

- 20 -

23,3 Gew.-% $Na_2O$,

11,1 Gew.-% $Al_2O_3$ ,

3,8 Gew.-% $V_2O_5$ ,

27,8 Gew.-% $P_2O_5$ und

34 Gew.-% $H_2O$ + $CO_2$ + Sonstiges
(F, $SO_3$ und $As_2O_3$)

unter Rühren auf 1 300°C erhitzt und durch 2 Stunden langes Halten dieser Temperatur unter Homogenisieren entgast.
Darauffolgend wurde die Schmelze mit einer Walzen aufweisenden maschinellen Flachglasfertigungsvorrichtung
zu Platten mit Abmessungen von 500 mm x 500 mm x 10 mm
(davon 2 mm Rippung) geformt, im amorphen glasartigen
Zustand auf 500°C abgekühlt, dann mittels erneuter
Wärmezufuhr durch 2 Stunden langes Halten der Temperatur
auf 500 bis 1 100°C kristallisiert und schließlich
während 16 Stunden abgekühlt. Die Zusammensetzung des
so hergestellten glaskeramischen Materiales war wie folgt:

52,5 Gew.-%  $SiO_2$ ,

20    Gew.-%  $Al_2O_3$ ,

6,8 Gew.-%  $FeO + Fe_2O_3$ ,

4,5 Gew.-%  $CaO$,

6,7 Gew.-%  $MoO$,

5,3 Gew.-%  $Na_2O + K_2O$,

0,1 Gew.-%  $V_2O_5$ ,

1    Gew.-%  $P_2O_5$         und

3,1 Gew.-%  Sonstiges    .

Die mikrokristalline Struktur des Produktes ermöglichte
es, aus ihm den höchsten Beanspruchungen ausgesetzte Bauverkleidungen beziehungsweise -abdeckungen, beispielsweise Böden von Unterführungen und Untergrundbahnstationen,
zu fertigen.

Patentansprüche

## Patentansprüche

1.) Verfahren zur Herstellung von geschmolzenen Silikatmaterialien mit einem Gehalt an 40 bis 67 Gew.-%
$SiO_2$, 3 bis 20 Gew.-% $Al_2O_3$, 2 bis 18 Gew.-%
$FeO + Fe_2O_3$, 2 bis 9 Gew.-% Alkalioxyden und
8 bis 30 Gew.-% Erdalkalimetalloxyden als chemischen Hauptbestandteilen durch Entgasen von 1 oder
mehr Grundmaterial(ien), gegebenenfalls zusammen
mit geringen Mengen von 1 oder mehr der Zusatzstoffe Flugstaub der Glasherstellung, Rotschlamm
der Tonerdeherstellung, Dolomit, Kalksteinstaub,
silikathaltiger industrieller beziehungsweise gewerblicher Flugstaub, Quarzsand, Gips, Manganerz(e), Fluorit, Kryolith, Borocalcit, Wollastonit
und Laugensalzkonzentrat(e) der Tonerdeherstellung
unter Schmelzen bei erhöhten Temperaturen, erforderlichenfalls mit Vermindern des Gehaltes der
Schmelze an $FeO + Fe_2O_3$ durch carbothermische
Reduktion unter 18 Gew.-% und anschließendem Abtrennen des metallischen Eisens, sowie Verarbeiten der
Schmelze in einer Schleuderrohrgießvorrichtung,
Gießform, zerfasernden Zentrifuge oder anderen
maschinellen Verarbeitungsvorrichtung, gegebenenfalls bei einer Temperatur von 500 bis 1 300°C
während 0,5 bis 15 Stunden, zu geschmolzenen massiven Silikatkörpern, geschmolzener Silikatwolle
oder geschmolzenem Silikatschaum, dadurch gekennzeichnet, daß man als Grundmaterial(ien) gemeindliche Abfälle (Gemeindemüll), industrielle Abfälle,
Abwasserschlamm der Papierherstellung, Abwasserklärschlamm, Kanalschlamm, Kohle und/oder Ölschiefer, gegebenenfalls in Mischung mit landwirtschaftlichen Abfällen und/oder im Falle der Verwendung von
von industriellen Abfällen verschiedenen Grundmaterialien, industriellen Abfällen, verwendet, vor dem
Entgasen ein Verbrennen des verbrennbaren Mengenanteiles in einem Kessel durchführt und das Entgasen
der so erhaltenen unbrennbaren Schlackenschmelze bei
1 100 bis 1 500$^{o}$C während 1 bis 4 Stunden vornimmt,
wobei man die gegebenenfalls durchgeführte Zugabe des
Zusatzstoffes beziehungsweise der Zusatzstoffe vor
und/oder während der Bildung des unbrennbaren Rückstandes des Grundmateriales beziehungsweise der Grundmaterialien und/oder in an sich bekannter Weise zum
unbrennbaren Rückstand des Grundmateriales beziehungsweise der Grundmaterialien zur Korrektur der Zusammensetzung vornimmt, mit der weiteren Maßgabe, daß man
im Falle der alleinigen Verwendung von Kohle als Grundmaterial mindestens einen Anteil mindestens 1 Zusatzstoffes vor und/oder während der Bildung des unbrennbaren Rückstandes des Grundmateriales beziehungsweise
der Grundmaterialien zugibt.

2.) Verfahren nach Anspruch 1, dadurch gekennzeichnet,
daß man bei Verwendung von gemeindlichen Abfällen als
alleinigem Grundmaterial das Entgasen bei 1 200 bis
1 400$^{o}$C durchführt und das beim Verarbeiten der
Schmelze gegebenenfalls erfolgende Erhitzen auf
500 bis 1 200$^{o}$C vornimmt.

3.) Verfahren nach Anspruch 1, dadurch gekennzeichnet,
daß man bei Verwendung von Kohle und/oder Ölschiefer als Grundmaterial(ien) das Entgasen bei 1 300 bis 1 500°C durchführt und das beim Verarbeiten der Schmelze gegebenenfalls erfolgende Erhitzen auf 500 bis 1 300°C während 2 bis 12 Stunden vornimmt.

4.) Verfahren nach Anspruch 1, dadurch gekennzeichnet, daß man im Falle der Verwendung von gemeindlichen Abfällen, industriellen Abfällen, Abwasserschlamm der Papierherstellung, Abwasserklärschlamm und/oder Kanalschlamm in Mischung mit landwirtschaftlichen Abfällen und/oder industriellen Abfällen als Grundmaterialien das Entgasen bei 1 100 bis 1 400°C durchführt und das beim Verarbeiten der Schmelze gegebenenfalls erfolgende Erhitzen auf 500 bis 1 200°C während 1 bis 15 Stunden vornimmt.

5.) Verfahren nach Anspruch 1 bis 4, dadurch gekennzeichnet, daß man den Zusatzstoff beziehungsweise die Zusatzstoffe in Mengen bis insgesamt 15 Gew.-%, insbesondere bis insgesamt 10 Gew.-%, bezogen auf das eingesetzte Grundmaterial beziehungsweise die eingesetzten Grundmaterialien, verwendet.

6.) Verfahren nach Anspruch 1 bis 5, dadurch gekennzeichnet, daß man während des Formens als Verarbeitens der unbrennbaren Schlackenschmelze oder danach ein Abkühlen, darauffolgend durch erneutes Erhitzen auf 500 bis 1 300°C ein Kristallisieren und schließlich ein Abkühlen auf die Umgebungstemperatur durchführt.

7.) Verfahren nach Anspruch 1 bis 6, dadurch gekennzeichnet, daß man das Entgasen der unbrennbaren
Schlackenschmelze unmittelbar nach ihrer Bildung
durchführt.

8.) Verfahren nach Anspruch 1 bis 5, dadurch gekennzeichnet, daß man vor dem Entgasen der unbrennbaren Schlackenschmelze ein Abziehen und Abkühlen
derselben und darauffolgend Schmelzen durch erneutes Erhitzen durchführt, das Formen als Verarbeiten bei 1 100 bis 1 400$^{o}$C vornimmt und danach
ein Kristallisieren durchführt.

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - B2 - 2 016 766 (TATABANYAI SZEN- BANYAK) <br> * Ansprüche * | 1-4,7, 8 | C 04 B 23/02 <br> C 04 B 35/16 |
| D | & HU - B - 162 340 | | |
| | -- | | |
| A | AT - B - 317 071 (ET THERMOCRETE BAU- PATENTE-VERWERTUNGSGESELLSCHAFT) <br> * Seite 2, erster Absatz * | 1 | |
| | -- | | |
| A | DE - C - 404 678 (SCHMELZ- UND HÜTTEN- WERK OBERSCHÖNEWEIDE J. NEUMANN) | | |
| | ---- | | |

**RECHERCHIERTE SACHGEBIETE (Int. Cl.³)**

C 04 B 7/00
C 04 B 23/00
C 04 B 31/00
C 04 B 35/00
F 23 G 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 10-03-1981 | HÖRNER |

EPA form 1503.1 06.78